# EUROPEAN PATENT SPECIFICATION

(11) **EP 1 867 417 B1**
(45) Date of publication and mention of the grant of the patent: **20.12.2017**
(21) Application number: 06729618.6
(22) Date of filing: 22.03.2006
(51) Int. Cl.: B23B 27/14, C23C 30/00, C23C 28/04, B23B 51/00, B23C 5/16

(54) **Indexable insert**
Wendeschneidplatte
Plaquette de coupe indexable

(30) Priority: 07.04.2005 JP 2005111199
(43) Date of publication of application: 19.12.2007
(73) Proprietor: Sumitomo Electric Hardmetal Corp., Itami-shi, Hyogo 664-0016 (JP)
(72) Inventor: OMORI, Naoya, SUMITOMO ELECTRIC HARDMETAL CORP., Itami-shi, Hyogo 664-0016 (JP); OKADA, Yoshio, SUMITOMO ELECTRIC HARDMETAL CORP., Itami-shi, Hyogo 664-0016 (JP); ITOH, Minoru, c/o SUMITOMO ELECTRIC HARDMETAL CORP, Itami-shi, Hyogo 664-0016 (JP); OKUNO, Susumu, SUMITOMO ELECTRIC HARDMETAL CORP., Itami-shi, Hyogo 664-0016 (JP); IMAMURA, Shinya, SUMITOMO ELECTRIC HARDMETAL CORP., Itami-shi, Hyogo 664-0016 (JP)
(74) Representative: Grünecker Patent- und Rechtsanwälte PartG mbB
(86) International application number: PCT/JP2006/305651
(87) International publication number: WO 2006/109457

(56) References cited:
- EP-A1- 0 298 729
- EP-A2- 1 260 611
- JP-A- 2004 050 385
- JP-A- 2004 050 385
- US-A- 4 430 031
- US-A- 5 477 754
- US-A1- 2002 132 141
- US-B1- 6 712 564

## Description

### Technical Field

The present invention relates to indexable inserts which are detachably mounted on cutting tools and used for machining of workpieces.

### Background Art

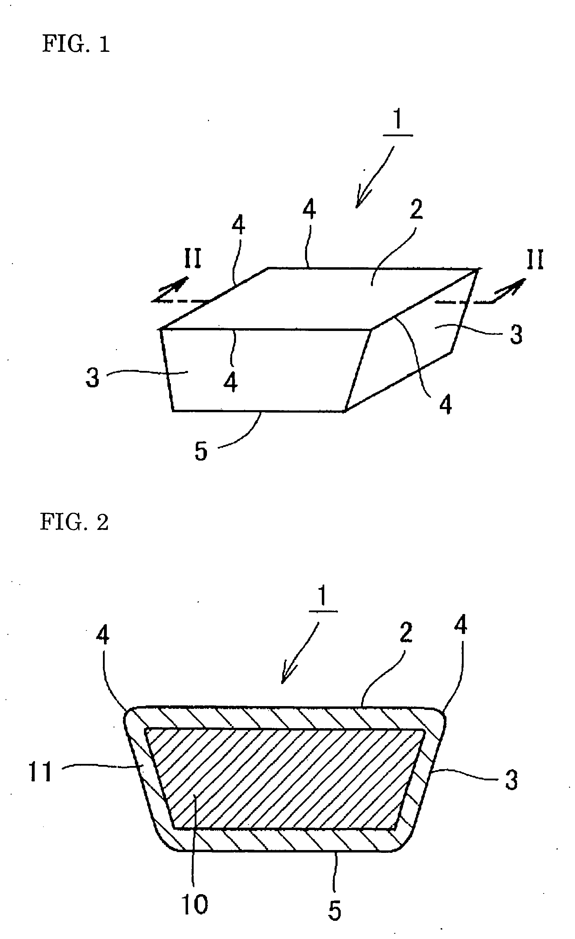

To date, indexable inserts have been detachably mounted on cutting tools to machine various types of workpieces. Such indexable inserts, for example, have a general structure such as that shown in Fig. 1. That is, as shown in Fig. 1 which shows the general structure of such an indexable insert, an indexable insert 1 usually has an upper surface, side surfaces, and a lower surface. The lower surface is often mounted on a cutting tool in a detachable manner, and the lower surface which is mounted on a cutting tool in such a detachable manner is referred to as a bearing surface 5. Meanwhile, when the lower surface serves as the bearing surface 5, the upper surface is located on the side that comes into contact with chips during cutting of a workpiece and is referred to as a rake face 2. Each side surface is located on one of the sides that come into contact with a workpiece itself and is referred to as a flank face 3. Parts corresponding to edges where the rake face 2 and the flank faces 3 intersect with each other are referred to as cutting edges 4, which play a key role in cutting. In such an indexable insert 1, a structure is generally used in which the surface of a substrate 10 is covered with a coating layer 11 as shown in Fig. 2.

When a workpiece is cut using a cutting tool provided with such an indexable insert, it is important to improve run-out accuracy. The term "run-out" means that when an indexable insert is mounted on a cutting tool, the mounting position (height of the edge) is not constant but varies, and the expression "to improve run-out accuracy" means that the occurrence of the run-out is reduced. As the run-out increases, cutting accuracy decreases, and the quality of workpiece appearance is degraded.

Under these circumstances, various attempts have been made to improve the run-out accuracy. However, in most of the attempts, the mounting structure on the side of a cutting tool is improved (for example, Japanese Unexamined Patent Application Publication No. 2004-261933 (Patent Reference 1)), and there have been hardly any approaches to improve an indexable insert itself.

Patent Reference 1: Japanese Unexamined Patent Application Publication No. 2004-261933

US 4,430,031 relates to a cutting tool comprising a cutting insert holder with a cutting insert positioned in a cutting insert receiving site and provided with a hole. The cutting insert is clamped by a locking screw positioned in the cutting insert hole and threaded into the cutting insert holder. The end part of the locking screw, which end part is positioned in the cutting insert hole, is excentrical relative to the rest of the screw and has a cross section deviating from that of the cutting insert hole. When clamping the cutting insert there is only a point contact between the screw and the cutting insert hole.

JP 2004-050385 relates to a coated cemented carbide tool 1 consisting of a cemented carbide base material 2 and coating layers 3 made of a plurality of ceramic material layers formed on the surface. The outer-most layer 4 has an average thickness of more than 0.1 µm when it is originally formed and a cutting edge line 6, a cutting face 7 and a flank 8 of the outer-most layer 4 are polished. These parts of the outer-most layer 4 that participate in cutting are burnished by this polish. Polishing is applied so that a part from the originally formed surface of the outer-most layer 4 up to its internal part is removed and the rest part remains.
EP1260611 A discloses an indexable cutting insert according to the preamble of claim 1.

### Disclosure of Invention

### Problems to be Solved by the Invention

The present invention has been achieved under the circumstances described above. It is an object of the present invention to provide an indexable insert in which run-out accuracy is particularly improved.

### Means for Solving the Problems

The present inventor has conducted intensive research to solve the above-mentioned problems, and as a result, it has been found that if the mounting stability of an indexable insert mounted on a cutting tool is poor, there might be a possibility that the run-out accuracy is decreased because the mounting position easily varies during machining. Further research has been made on the basis of this finding, and by intensively studying the means for improving the mounting stability of an indexable insert on a cutting tool, the present invention has finally been completed.

That is, an indexable insert according to the present invention has a structure as defined in claim 1.

The coating layer preferably has a thickness in a range of 0.05 to 30 µm.

Furthermore, the coating layer may be produced by chemical vapor deposition, and also may be produced by arc ion plating or magnetron sputtering.

Preferably, the substrate is made of any one of cemented carbides, cermets, high-speed steels, ceramics, sintered cubic boron nitride compacts, sintered diamond compacts, and sintered silicon nitride compacts. The indexable insert may be an indexable insert for drilling, end milling, metal-slitting saw machining, gear-cutting tool machining, reamer machining, tap machining, crankshaft pin milling, milling, or turning, and also the indexable insert may be a positive cutting insert.

### Advantages

In the indexable insert of the present invention, by employing the structure described above, it is possible to successfully, significantly improve run-out accuracy

### Brief Description of the Drawings

Figure 1 is a schematic perspective view which shows a general structure of an indexable insert.
Figure 2 is a schematic cross-sectional view taken along the line II-II of Fig. 1.

### Reference Numerals

- 1: indexable insert
- 2: rake face
- 3: flank face
- 4: cutting edge
- 5: bearing surface
- 10: substrate
- 11: coating layer

### Best Mode for Carrying Out the Invention

The present invention will be described in more detail below. Embodiments will be described with reference to the drawings. In the drawings of the present application, the same reference numerals are used to designate the same or corresponding elements. Each drawing is a schematic one for illustration purposes only. The layered structure of a coating layer, the dimensional ratio of the thickness of a coating layer to a substrate, the dimensional ratio of the corner radius (R), and the like indicated therein are different from the actual ones. Note that the expressions "rake face", "flank face", "cutting edge", "bearing surface", and the like used in the present application are concepts that include not only portions and surfaces located at uppermost surfaces of the indexable insert but also surfaces of the substrate, surfaces of the individual layers of the coating layer, and corresponding portions located inside the individual layers, etc.

### <Indexable insert>

Indexable inserts according to the present invention are detachably mounted on various cutting tools and used for machining of various workpieces. Such indexable inserts have a known general structure for this type of indexable insert. For example, as shown in Fig. 1 which shows such a general structure, an indexable insert has a structure including at least a rake face 2 and a bearing surface 5. A cutting edge 4 lies between the rake face 2 and a flank face 3, and the rake face 2 is connected to the flank face 3 with the cutting edge 4 therebetween. When an upper surface serves as the rake face 2, the bearing surface 5 is located at a position corresponding to a lower surface and is a part that is mounted on a cutting tool.

As shown in Fig. 2, which is a schematic cross-sectional view taken along the line II-II of Fig. 1, such an indexable insert includes a substrate 10 and a coating layer 11 disposed on the substrate. The coating layer 11 disposed in such a manner improves properties, such as toughness and wear resistance, and it is possible to greatly improve the durability (life) of the indexable insert. Such a coating layer will be described in detail below. Figure 2 shows a structure in which the coating layer 11 consists of one layer only and covers the entire surface of the substrate 10. However, this is schematic only and the coating layer is not limited to such a structure.

Such an indexable insert can be used, for example, for drilling, end milling, metal-slitting saw machining, gear-cutting tool machining, reamer machining, tap machining, crankshaft pin milling, milling, or turning.

The indexable insert of the present invention is a positive cutting insert (in which a rake face and a flank face intersect with each other at an acute angle). The reason for this is that, in the positive cutting insert, since one of the upper and lower surfaces is used, the area of the bearing surface generally increases, and thus the effect of the present invention is easily achieved. Furthermore, examples of the indexable insert of the present invention include those provided with chip breakers and those not provided with chip breakers. Furthermore, examples of the cutting edge include those being a sharp edge (i.e., an edge where a rake face and a flank face intersect with each other), those subjected to honing (obtained by providing a sharp edge with a corner radius), those provided with a negative land (chamfered), and combinations of those subjected to honing and those provided with a negative land.

Furthermore, in the indexable insert of the present invention, a through-hole may be formed so as to penetrate from the rake face to the bearing surface, the through-hole being used as a fixing hole for fixing the indexable insert on a tool. According to need, in addition to or in place of the fixing hole, another fixing means may be provided.

### <Substrate>

As the material constituting the substrate of the indexable insert of the present invention, any of materials that are known to be used as a substrate of such an indexable insert can be used without particular limitations. Examples thereof include cemented carbides (such as WC-based cemented carbides, and those containing, in addition to WC, Co, or further incorporated with a carbide, a nitride, a carbonitride, or the like of Ti, Ta, Nb, or the like), cermets (containing TiC, TiN, TiCN, or the like as a main component), high-speed steels, ceramics (titanium carbide, silicon carbide, silicon nitride, aluminum nitride, aluminum oxide, and mixtures thereof, etc.), sintered cubic boron nitride compacts, sintered diamond compacts, and sintered silicon nitride compacts. In the case in which a cemented carbide is used for the substrate, even if the structure of the cemented carbide contains free carbon or an abnormal phase called an ε phase, the advantage of the present invention is exhibited.

Furthermore, the substrate made of any of these materials may be subjected to surface modification. For example, in the case of a cemented carbide, a β-free layer may be formed on the surface thereof. In the case of a cermet, a surface-hardening layer may be provided. Even if surface modification is performed as described above, the advantage of the present invention is exhibited.

### <Surface roughness Rz of coating layer>

The coating layer of the indexable insert of the present invention includes one or more layers and satisfies the relationship 0.9>R1/R2, wherein R1 represents the surface roughness Rz of the coating layer in the rake face, and R2 represents the surface roughness Rz of the coating layer in the bearing surface. Preferably, R1 represents the surface roughness Rz of an area that participates in cutting in the rake face.

Herein, the surface roughness Rz refers to the ten-point height of irregularities regulated in JIS B0601:2001. It is necessary to satisfy the relationship 0.9>R1/R2, wherein R1 represents the surface roughness Rz of the coating layer in the rake face, and R2 represents the surface roughness Rz of the coating layer in the bearing surface. By providing this relationship, it is possible to effectively reduce the amount of welding of the workpiece material on the cutting edge (the area that participates in cutting), and also the mounting stability of the indexable insert on the cutting tool is spectacularly improved, and the run-out accuracy is particularly improved. Consequently, because of the synergy of these effects, the quality of appearance of the workpiece which has been machined using the indexable insert of the present invention is spectacularly improved. Preferably, the relationship 0.85>R1/R2 is satisfied, and more preferably, the relationship 0.8>R1/R2 is satisfied.

When R2, which is the surface roughness Rz of the coating layer in the bearing surface, is in a range of 10 to 0.1 µm, the mounting stability on the cutting tool is improved. With respect to R1, which is the surface roughness Rz of the coating layer in the rake face, a smaller numerical value is more preferable. The reason for this is that welding of the workpiece material on the cutting edge can be effectively reduced.

Furthermore, R1, which is the surface roughness Rz of the coating layer in the rake face, preferably represents the surface roughness Rz of an area that participates in cutting in the rake face. By specifying the surface roughness Rz of such an area as R1, in particular, welding of the workpiece material on the cutting edge can be reduced, and improvement in the quality of workpiece appearance after machining is achieved. Here, the area that participates in cutting means a region extending from the cutting edge toward the rake face with a width of at least 0.01 mm. The width is generally 0.05 mm or more, and more generally 0.1 mm or more in many cases.

Meanwhile, R2, which is the surface roughness Rz of the coating layer in the bearing surface, preferably represents the surface roughness Rz of a flat surface in the bearing surface. The reason for this is that the contact area with the cutting tool increases in this flat surface. Here, the flat surface means a flat portion other than grooves or recesses which may be formed on the bearing surface of the substrate.

If the value R1/R2 exceeds 0.9, the quality of workpiece appearance after machining is degraded. This is believed to be caused by the degradation in run-out accuracy due to lower mounting stability of the indexable insert on the cutting tool. It is not possible to constantly obtain a satisfactory quality of workpiece appearance simply by setting the surface roughness R2 in the bearing surface in the numerical range described above. Therefore, by correlating R1 and R2 so as to satisfy the relationship 0.9>R1/R2, it is assumed that various conditions, such as vibration, during machining of the indexable insert mounted on the cutting tool can be controlled superbly, and the excellent effect described above is exhibited.

Furthermore, the coating layer in the rake face and the coating layer in the bearing surface, which have the surface roughnesses Rz (i.e., R1 and R2) described above, may have the same compound composition (including the case of the same layer formed in the same process) or may have different compound compositions. Furthermore, the substrate, which serves as an underlying layer of portions in which R1 and R2 are specifically measured, preferably has the same surface state in the regions at which R1 and R2 are measured. Namely, if the surface of the substrate in one region is in a sintered state (untreated surface which is not subjected to polishing or the like), the surface in the other region must be in a sintered state. On the other hand, if the surface of the substrate in one region is in a polished state, the surface in the other region must be in a polished state. The reason for this is that such a surface state of the substrate influences the surface state of the coating layer (i.e., surface roughness Rz).

Furthermore, the method for producing the relationship 0.9>R1/R2 is not particularly limited. For example, when the coating layer is formed so as to cover the substrate by CVD, which will be described below, a method may be used in which after the formation of the coating layer, a known polishing process is performed on the surface of the coating layer other than the region in the bearing surface (or the surface of the coating layer in the rake face). For example, a known polishing process using diamond grinding stones, SiC grinding stones, resin bond grinding stones, elastic grinding stones, an electroplated grinding wheel, shotblasting, a diamond brush, a SiC brush, a buffing cloth, or the like may be employed. In such a case, when the coating layer includes two or more layers, the outermost layer (one or more layers) of the coating layer in the rake face, etc. may have been removed. Furthermore, the surface of the coating layer in the bearing surface may be subjected to the polishing process described above (provided that the polishing process is performed under the different conditions from those of the polishing process performed on the surface of the coating layer in the rake face).

On the other hand, when the coating layer is formed by PVD, which will be described below, it is possible to form droplets in the coating layer in the bearing surface by setting the substrate such that the bearing surface is opposed to the target to produce a rougher surface than the rake face. In such a case, it is also possible to combine any of the polishing processes described above.

### <Structure of coating layer>

The coating layer of the present invention is formed on the substrate and includes one or more layers as described above. Such a coating layer does not necessarily cover the entire surface of the substrate and may cover only a part thereof. Furthermore, the coating layer does not necessarily have the same structure over the entire surface of the substrate. For example, the coating layer may have different layered structures between the rake face and the bearing surface or between the rake face and the flank face. That is, the surface of the coating layer having the surface roughness R1 and the surface of the coating layer having the surface roughness R2 may have different compound compositions.

The one or more layers in the rake face include a layer made of aluminum oxide which has compressive residual stress. The coating layer of the present invention may include at least one layer made of a compound containing at least one element selected from the group consisting of Group IVa elements, Group Va elements, and Group VIa elements in the periodic table, Al, and Si, and at least one element selected from the group consisting of carbon, nitrogen, oxygen, and boron.

Preferred examples of the compound constituting the coating layer include TiC, TiN, TiCN, TiCNO, TiB₂, TiBN, TiBNO, TiCBN, ZrC, ZrO₂, HfC, HfN, TiAlN, CrAlN, CrN, VN, TiSiN, TiSiCN, AlTiCrN, TiAlCN, Al₂O₃, ZrCN, ZrCNO, AlN, AlCN, ZrN, and TiAlC. With the use of a layer made of aluminum oxide as at least one layer constituting the coating layer, it is possible to provide a coating layer having excellent adhesion resistance and wear resistance as well as high strength. In this respect, preferably, the outermost layer in the rake face is composed of a layer made of aluminum oxide, and particularly preferably, the outermost layer of the coating layer in the area that participates in cutting in the rake face is composed of a layer made of aluminum oxide. The crystal structure of the aluminum oxide is not particularly limited. Examples thereof include α-Al₂O₃, γ-Al₂O₃, and κ-Al₂O₃.

The layer made of aluminum oxide has compressive residual stress, and in particular, has compressive residual stress in the area that participates in cutting in the rake face. Thereby, the cutting edge strength can be significantly improved, and excellent resistance to fracture can be obtained.

The term "compressive residual stress" is defined as a type of internal stress (inherent distortion) present in the coating layer and is a stress represented by a negative ("-") numerical value (units: "GPa" in the present invention). Consequently, the concept that the compressive residual stress is large means that the absolute value of the numerical value is large, and the concept that the compressive residual stress is small means that the absolute value of the numerical value is small. Incidentally, the term "tensile residual stress" is defined as a type of internal stress (inherent distortion) present in the coating layer and is a stress represented by a positive ("+") numerical value.

The method for imparting the compressive residual stress is not particularly limited. For example, in the case where the coating layer is formed by CVD, after the formation of the coating layer, by performing a treatment, such as blasting, shot-peening, barrel processing, brushing, or ion implantation, on the coating layer, compressive residual stress can be imparted. On the other hand, in the case where the coating layer is formed by PVD, since compressive residual stress is imparted during the formation, it is not necessary to perform the treatment described above. However, even in such a case, the treatment described above may be performed as desired.

The residual stress (both compressive residual stress and tensile residual stress) can be measured by a sin² ψ technique using an X-ray stress measurement device. Such residual stress can be measured by a method in which stress is measured at any 10 points (which are preferably selected so as to be 0.5 mm or more apart from each other so that the stress of the layer can be represented appropriately) included in the coating layer using the sin² ψ technique, and the average value thereof is calculated.

Such a sin² ψ technique using X-rays has been widely used as the method for measuring the residual stress in polycrystalline materials. For example, the method which is described in detail on pages 54 to 67 in "X-ray Stress Measurement Method" (The Society of Materials Science, Japan, 1981, published by Yokendo Ltd.) may be used.

Furthermore, the residual stress can also be measured by a method using Raman spectroscopy. Such Raman spectroscopy is advantageous because it can carry out a local measurement of a narrow range, such as a spot diameter of 1 µm. The measurement of residual stress using Raman spectroscopy is commonly carried out. For example, the method described on pages 264 to 271 in "Hakumaku no rikigakuteki tokusei hyoka gijutsu (Techniques for evaluating dynamic properties of thin films)" (Sipec (the company name has been changed to Realize Advanced Technology Limited), published in 1992) can be employed.

Particularly preferred examples of the compound constituting the outermost layer having the surface roughness R1 in the rake face, among the compounds constituting the coating layer described above, include, in addition to the aluminum oxide (Al₂O₃) described above, TiCN, TiN, TiBN, TiCNO, AlN, ZrCN, ZrN, ZrC, Zr-containing Al₂O₃, and ZrO₂.

Meanwhile, preferred examples of the compound constituting the outermost layer having the surface roughness R2 in the bearing surface include TiC, TiN, TiCN, TiCNO, TiB₂, TiBN, TiBNO, TiCBN, HfC, HfN, VN, TiSiN, TiSiCN, ZrCN, ZrCNO, AlCN, ZrN, and TiAlC.

The coating layer preferably has a thickness in a range of 0.05 to 30 µm (total thickness when two or more layers constitute the coating layer). If the thickness is less than 0.05 µm, there may be cases in which the characteristics described above are not satisfactorily exhibited. Even if the thickness exceeds 30 µm, there is not much difference in effect, which is economically disadvantageous. With respect to the thickness of the coating layer, the upper limit is more preferably 20 µm or less, and still more preferably 15 µm or less, and the lower limit is more preferably 0.1 µm or more, and still more preferably 0.5 µm or more.

The coating layer can be formed directly on the substrate. The formation method (deposition method) of the coating layer is not particularly limited, and any known method may be employed, for example, a chemical vapor deposition (CVD) method, or a physical vapor deposition (PVD) method (including a sputtering method). In particular, when the coating layer is formed using a chemical vapor deposition method, preferably, the layer is formed by a medium-temperature CVD (MT-CVD) method. In particular, it is most suitable to provide a titanium carbonitride (TiCN) layer formed by this method, the layer having excellent wear resistance. In the conventional CVD method, film deposition is performed at about 1,020°C to 1,030°C. In contrast, in the MT-CVD method, film deposition can be performed at a relatively low temperature of about 850°C to 950°C. Thus, it is possible to reduce the damage of the substrate due to heating during film deposition. Consequently, the layer formed by the MT-CVD method is preferably provided in close proximity to the substrate. Furthermore, as the gas used for film deposition, use of a nitrile gas, in particular, acetonitrile (CH₃CN), is preferable in view of high mass productivity. By using a multilayer structure in which a layer formed by the MT-CVD method and a layer formed by a high-temperature CVD (HT-CVD) method (i.e., the conventional CVD method) are stacked on each other, adhesion between the layers in the coating layer may be improved, which is preferable in some cases.

Furthermore, when the coating layer of the present invention is formed by a physical vapor deposition method, preferably, the layer is formed by arc ion plating or magnetron sputtering. The reason for this is that excellent adhesion between the substrate and the coating layer is exhibited.

The coating layer of the present invention preferably has a structure including a base layer and a wear-indicating layer disposed on the base layer. The base layer mainly has a function of improving the various properties, such as wear resistance and toughness, of the indexable insert. On the other hand, the wear-indicating layer mainly has a function of identifying the use/non-use of the cutting edge. Furthermore, the wear-indicating layer preferably has a function of easily changing color when the adjacent cutting edge is used. The change in color may be caused by a change in color of the wear-indicating layer itself, or the wear-indicating layer may appear to have changed color because the wear-indicating layer is detached to expose the base layer, which is the underlying layer. Consequently, the wear-indicating layer preferably has lower wear resistance than the base layer, and also, preferably, the base layer and the wear-indicating layer have different colors and high chromatic contrast with each other.

Specific examples of the base layer are the same as those of the coating layer described above. On the other hand, specific examples of the wear-indicating layer include the followings, in addition to the same as those of the base layer.

That is, the wear-indicating layer may be at least one layer made of at least one metal (element) selected from the group consisting of Group IVa elements, Group Va elements, and Group VIa elements in the periodic table, Al, Si, Cu, Pt, Au, Ag, Pd, Fe, Co, and Ni, or an alloy containing the metal.

For example, in the case where the outermost layer of the base layer is an Al₂O₃ layer and has a substantially black appearance, by using a TiN layer (gold) or a Cr layer (silver) as the wear-indicating layer, it is possible to achieve a relatively high chromatic contrast.

The wear-indicating layer preferably has a smaller thickness than that of the base layer. The wear-indicating layer has a thickness (total thickness when the wear-indicating layer includes two or more layers) of preferably 0.05 to 2 µm, and more preferably 0.1 to 0.5 µm. If the thickness is less than 0.05 µm, it becomes difficult to industrially perform coating uniformly on a predetermined part, and thus, color irregularities may occur in the appearance, resulting in impairment to the appearance. Even if the thickness exceeds 2 µm, a significant difference is not observed as the wear-indicating layer, which is rather economically disadvantageous.

Preferably, the wear-indicating layer is disposed on the base layer entirely or partially in an area which lies on the rake face and which is other than an area that participates in cutting. The wear-indicating layer is also preferably disposed on the base layer entirely or partially in an area which lies on the flank face. By disposing the wear-indicating layer in such an area, it is possible to easily identify the use/non-use of the cutting edge without a demerit that the material constituting the wear-indicating layer is deposited on the workpiece and the appearance of the workpiece after cutting is impaired. Herein, the expression "an area which lies on the rake face and which is other than an area that participates in cutting" means a region on the rake face other than a region that extends from the cutting edge toward the rake face with a width of at least 0.01 mm. The width is generally 0.05 mm or more, and more generally 0.1 mm or more in many cases.

### EXAMPLES

While the present invention will be described in more detail by way of examples, it is to be understood that the present invention is not limited thereto.

First, a cemented carbide powder having a composition including 87.8% by mass of WC, 1.7% by mass of TaC, and 10.5% by mass of Co was pressed. Subsequently, the resulting compact was sintered in a vacuum atmosphere at 1,400°C for 1 hour, and then subjected to planarization polishing. A cutting edge part was subjected to cutting-edge treatment by means of SiC brush honing (providing an intersection between a rake face and a flank face with a corner radius (R) of about 0.05 mm). Thereby, a substrate of an indexable insert made of a cemented carbide having the same shape as that of a cutting insert SEMT13T3AGSN-G (manufactured by Sumitomo Electric Hardmetal Corp.) was obtained. In the substrate, a beta-free layer was not disposed on the surface thereof. This indexable insert (substrate) had a structure including one rake face and one bearing surface.

Next, a plurality of such a substrate were prepared. Coating layers (Nos. 1 to 9) shown in Table I below were each formed on the entire surface of a corresponding substrate. In Table I below, in each coating layer, the layers were deposited over the surface of the substrate in that order from the left to the right, and the rightmost layer constituted the outermost layer of the coating layer (the surface of the coating layer). The coating layers Nos. 1 to 5 were each formed by a known CVD method, and the coating layers Nos. 6 to 9 were each formed by a known arc ion plating method.

In the coating layer No. 9, the individual layers were formed with the bearing surface of the substrate being opposed to the target (cathode side). In the coating layers Nos. 6 to 8, the individual layers were formed with the rake face of the substrate being opposed to the target (cathode side). Note that the coating layer No. 4 had a structure in which a TiN layer corresponding to the outermost layer in the coating layer No. 1 was removed by shotblasting after the film deposition, and that the coating layer No. 5 had a structure in which a TiN layer corresponding to the outermost layer in the coating layer No. 2 was removed by shotblasting after the film deposition.

**[Table I]**

| Coating layer No. | Structure of coating layer [Numerical value in parentheses shows thickness of each layer (µm).] | Total thickness (µm) |
|---|---|---|
| 1 | TiN(0.2)/MT-TiCN(2.0)/HT-TiCN(1.0)/α-Al₂O₃(2.0)/TiN(0.5) | 5.7 |
| 2 | TiN(0.4)/MT-TiCN(2.1)/TiBN(0.4)/κ-Al₂O₃(1.4)/TiN(0.4) | 4.7 |
| 3 | TiC(0.4)/MT-TiCN(1.7)/ZrO₂(1.0)/TiN(0.3) | 3.4 |
| 4 | TiN(0.2)/MT-TiCN(2.0)/HT-TiCN(1.0)/α-Al₂O₃(2.0) | 5.2 |
| 5 | TiN(0.4)/MT-TiCN(2.1)/TiBN(0.4)/κ-Al₂O₃(1.4) | 4.3 |
| 6 | TiAlN(2.0)/α-Al₂O₃(2.1)/TiN(0.4) | 4.5 |
| 7 | CrAlN(3.0)/κ-Al₂O₃(1.4) | 4.4 |
| 8 | TiN(0.3)/TiAlN(2.6)/TiCN(0.4) | 3.3 |
| 9 | TiN(0.3)/TiAlN(2.6)/TiCN(0.4) | 3.3 |

In the above table, "MT-" indicates formation by a MT-CVD method (film deposition temperature 900°C), and "HT-" indicates formation by a HT-CVD method (film deposition temperature 1,000°C).

Subsequently, the following polishing process (shotblasting) was performed on each of the indexable inserts, in which the coating layer was formed on the substrate as described above, to produce indexable inserts (Nos. 1 to 14) in which the coating layer included one or more layers and satisfied the relationship 0.9>R1/R2, wherein R1 represents the surface roughness Rz of the coating layer in the rake face, and R2 represents the surface roughness Rz of the coating layer in the bearing surface, and indexable inserts (Nos. 15 to 17) according to comparative examples as shown in Table II below. The R1 value was obtained by measuring the surface of the coating layer in an area participating in cutting (i.e., a region extending from the cutting edge toward the rake face with a width of 0.3 mm) in the rake face of each indexable insert, and the value R2 was obtained by measuring a flat surface of the coating layer in the bearing surface.

In the indexable inserts Nos. 1 to 8 and No. 10 shown in Table II below, the relationship 0.9>R1/R2 was provided by performing a polishing process (abrasive grains: alumina sand No. 120 (average grain size 100 µm), pressure: 0.3 MPa) on a region other than the bearing surface (i.e., from the rake face side).

In the indexable insert No. 9 shown in Table II below, the relationship 0.9>R1/R2 was provided on the same indexable insert as the indexable insert No. 10 without performing a polishing process.

In the indexable inserts Nos. 11 and 12 shown in Table II below, the relationship 0.9>R1/R2 was provided by performing a polishing process on a region other than the bearing surface (i.e., from the rake face side) under different conditions from those of the indexable insert No. 4 (with the treatment time and the distance between the work (indexable insert) and the nozzle being changed).

In the indexable inserts Nos. 13 and 14 shown in Table II below, the relationship 0.9>R1/R2 was provided by performing, instead of the polishing process performed on the indexable insert No. 4, a polishing process using a SiC brush (#800 SiC brush) on a region other than the bearing surface (i.e., from the rake face side).

In the indexable inserts Nos. 15 to 17 of the comparative examples shown in Table II were, respectively, the same as the indexable inserts Nos. 1, 6, and 8 except that the polishing process was not performed, and the relationship 0.9>R1/R2 was not satisfied.

With respect to each of the indexable insert No. 1 of the example and the indexable insert No. 15 of the comparative example, the residual stress of the layer made of aluminum oxide (α-Al₂O₃) was measured by the sin² ψ technique described above (the measurement was performed in the area participating in cutting in the rake face). As a result, the indexable insert No. 1 had a residual stress of -0.8 GPa, and the indexable insert No. 15 had a residual stress of 0.2 GPa.

Using the indexable inserts Nos. 1 to 17, a run-out test and a milling test were performed. The results thereof are shown in Table II below.

### (Run-out test)

In this run-out test, as a cutting tool, a cutter (Model WGC4160R, manufactured by Sumitomo Electric Hardmetal Corp.) on which seven indexable inserts could be mounted was used. The insert mounting positions of the cutter were numbered from 1 to 7 in advance. With respect to each of the indexable inserts shown in Table II, seven indexable inserts were mounted on the cutter. Using the position of the cutting edge (height of the cutting edge) of the indexable insert mounted at the No. 1 position as a reference value, a difference between the reference value and the position of the cutting edge of each of the indexable inserts mounted at the Nos. 2 to 7 positions was measured. Among the resulting differences, the largest absolute value of the difference was obtained, (which was considered as the absolute value 1).

Subsequently, cutting was performed for one minute under the same conditions as those of the milling test described below, and then the largest absolute value of the difference was obtained in the same manner as above, (which was considered as the absolute value 2).

The difference between the absolute value 1 and the absolute value 2 was calculated. The result thereof (the absolute value of the difference) is shown in Table II. A larger numerical value indicates that the indexable insert moves to a greater extent (namely, the mounting stability on the cutting tool degrades).

### (Milling test)

Cutting tool: cutter (Model WGC4160R (manufactured by Sumitomo Electric Hardmetal Corp.))
Workpiece: SCM435
Cutting speed: 230 m/min
Depth of cut: 2.0 mm
Feed: 0.20 mm/rev
Dry/Wet: wet (with lubricant)
Cutting distance: 10 m

Note that this test was performed under the conditions described above with one indexable insert being mounted on the cutter, unlike the run-out test.

After the machining was performed under the conditions described above, the flank face wear was measured, and welding of the workpiece material on the cutting edge and the state of the machined surface of the workpiece were observed. Note that the welding of the workpiece material on the cutting edge and the state of the machined surface of the workpiece were evaluated under the following criteria.

In the flank face wear, a smaller numerical value indicates higher wear resistance. In the welding of the workpiece material on the cutting edge, a larger number indicates higher wear resistance. In the state of the machined surface of the workpiece, a larger number indicates a better state (closer to specular).

### (Evaluation of welding of workpiece material on cutting edge)

3: Minimal amount of welding
2: Slight amount of welding observed
1: Large amount of welding

### (Evaluation of state of machined surface of workpiece)

3: Almost specular
2: Close to specular
1: Cloudy

**[Table II]**

| | Indexable insert No. | Coating layer No. | R1/R2 | Run-out test (µm) | Welding of workpiece material on cutting edge | State of machined surface of workpiece | Flank face wear (mm) |
|---|---|---|---|---|---|---|---|
| | 1 | 1 | 0.73 | 4 | 2 | 3 | 0.046 |
| | 2 | 2 | 0.79 | 4 | 2 | 3 | 0.063 |
| | 3 | 3 | 0.71 | 3 | 2 | 3 | 0.047 |
| | 4 | 4 | 0.66 | 3 | 3 | 2 | 0.041 |
| | 5 | 5 | 0.76 | 4 | 3 | 2 | 0.066 |
| | 6 | 6 | 0.68 | 3 | 2 | 3 | 0.059 |
| | 7 | 7 | 0.74 | 4 | 3 | 2 | 0.057 |
| | 8 | 8 | 0.73 | 4 | 2 | 3 | 0.071 |
| | 9 | 9 | 0.88 | 4 | 2 | 3 | 0.070 |
| | 10 | 9 | 0.71 | 5 | 2 | 3 | 0.069 |
| | 11 | 4 | 0.64 | 4 | 3 | 2 | 0.038 |
| | 12 | 4 | 0.32 | 1 | 3 | 2 | 0.032 |
| | 13 | 4 | 0.73 | 4 | 3 | 2 | 0.042 |
| | 14 | 4 | 0.41 | 1 | 3 | 2 | 0.033 |
| Comparative example | 15 | 1 | 0.95 | 18 | 2 | 1 | 0.078 |
| | 16 | 6 | 0.97 | 16 | 2 | 1 | 0.095 |
| | 17 | 8 | 1.02 | 17 | 2 | 1 | 0.102 |

As is evident from Table II, in the indexable inserts in which the relationship 0.9>R1/R2 is satisfied, good results are obtained in the run-out test, and the run-out accuracy is particularly improved in comparison with the indexable inserts of the comparative examples in which the relationship 0.9>R1/R2 is not satisfied. The amount of welding of the workpiece material on the cutting edge is also decreased. Consequently, in those cutting inserts, the quality of workpiece appearance after machining is good (close to specular) and the flank face wear is decreased in comparison with the indexable inserts of the comparative examples.

After the milling test was performed, the cutting edge of each of the indexable insert Nos. 1 and 15 was observed. As a result, chipping was not recognized in the insert No. 1, but chipping was recognized in the No. 15 insert. Thus, it has been confirmed that resistance to fracture improves if the layer made of aluminum oxide located in the rake face has compressive residual stress.

The individual tests performed as described above were also performed under the following conditions (with the same composition of the substrate, the same compositions of the coating layers, and the same polishing processes), and the same results were confirmed. That is, under the conditions in which the shape of the indexable insert and the model of the cutting tool (cutter) were respectively changed to the shape of an indexable insert (SDKN42MT (manufactured by Sumitomo Electric Hardmetal Corp.)) and a cutter (model FPG4100R (manufactured by Sumitomo Electric Hardmetal Corp.)), and under the conditions in which the shape of the indexable insert and the model of the cutting tool (cutter) were respectively changed to the shape of an indexable insert (CNMM190612N-MP (manufactured by Sumitomo Electric Hardmetal Corp.)) and a tool (Model PCBNR4040-64 (manufactured by Sumitomo Electric Hardmetal Corp.)), the same results were obtained.

Furthermore, three indexable inserts, which were the same as the indexable insert No. 1 of the present invention, were produced, in which the outermost layer (i.e., the TiN layer) of the coating layer was used as a wear-indicating layer, and the wear-indicating layer was formed (1) only on the rake face, (2) only on the flank face, or (3) in a region other than the vicinity of the cutting edge. The same tests as those performed above were also performed on each of the indexable inserts. As a result, the same excellent effect was exhibited as in the case described above, and also it was possible to easily identify the use/non-use of the cutting edge.

Although a cutter was used as the cutting tool in the examples described above, it is also possible to achieve the effect of the present invention in a positive cutting insert for turning.

The embodiments and examples which have been disclosed herein are illustrative only and not to be construed as limiting the scope of the present invention. The invention is not limited by the illustrative embodiments, but only by the scope of the appended claims, and it should be understood that various modifications may be made within the scope of the appended claims.

## Claims

1. An indexable insert (1) having a structure including at least a rake face (2) and a bearing surface (5), comprising a substrate (10) and a coating layer (11) disposed on the substrate (10), wherein the coating layer (11) includes one or more layers and wherein the indexable insert (1) is a positive cutting insert having an upper surface being the rake face (2) and a lower surface being the bearing surface (5),
**characterized in that** the coating layer (11)
satisfies the relationship 0.9>R1/R2, wherein R1 represents the surface roughness Rz of the coating layer (11) in the rake face (2), and R2 represents the surface roughness Rz of the coating layer (11) in the bearing surface (5);
wherein Rz refers to the ten-point height of irregularities; and
**in that** the one or more coating layers in the rake face include a layer made of aluminum oxide which has compressive residual stress.

2. The indexable insert (1) according to claim 1, wherein the coating layer (11) includes at least one layer made of a compound containing at least one element selected from the group consisting of Group IVa elements, Group Va elements, and Group VIa elements in the periodic table, Al, and Si, and at least one element selected from the group consisting of carbon, nitrogen, oxygen, and boron.

3. The indexable insert (1) according to claim 2, wherein the compound is aluminum oxide.

4. The indexable insert (1) according to claim 1, wherein the coating layer (11) has a thickness in a range of 0.05 to 30 µm.

5. The indexable insert (1) according to claim 1, wherein the coating layer (11) is produced by chemical vapor deposition.

6. The indexable insert (1) according to claim 1, wherein the coating layer (11) is produced by arc ion plating or magnetron sputtering.

7. The indexable insert (1) according to claim 1, wherein the substrate (10) is made of any one of cemented carbides, cermets, high-speed steels, ceramics, sintered cubic boron nitride compacts, sintered diamond compacts, and sintered silicon nitride compacts.

8. The indexable insert (1) according to claim 1, wherein the indexable insert (1) is an indexable insert for drilling, end milling, metal-slitting saw machining, gear-cutting tool machining, reamer machining, tap machining, crankshaft pin milling, milling, or turning.

## Patentansprüche

1. Wendeschneidplatte (1) mit einer Struktur mit wenigstens einer Spanfläche (2) und einer Auflagefläche (5), die ein Substrat (10) und eine auf dem Substrat (10) angeordnete Beschichtungsschicht (11) aufweist,
wobei die Beschichtungsschicht (11) eine oder mehrere Schichten aufweist, und
wobei die Wendeschneidplatte (1) ein positiver Schneideinsatz ist, dessen obere Fläche die Spanfläche (2) und dessen untere Fläche die Auflagefläche (5) ist,
**dadurch gekennzeichnet, dass**
die Beschichtungsschicht (11) die Beziehung 0,9>R1/R2 erfüllt, wobei R1 die Oberflächenrauheit Rz der Beschichtungsschicht (11) in der Spanfläche (2) und R2 die Oberflächenrauheit Rz der Beschichtungsschicht (11) in der Auflagefläche (5) darstellen; wobei Rz die Zehn-Punkt-Höhe von Unregelmäßigkeiten betrifft; und
die eine oder mehreren Schichten in der Spanfläche eine Schicht aus Aluminiumoxid, die eine Druckeigenspannung aufweist, umfasst/umfassen.

2. Wendeschneidplatte (1) nach Anspruch 1, wobei die Beschichtungsschicht (11) wenigstens eine Schicht umfasst, die aus einer Verbindung gebildet ist, die wenigstens ein Element, das aus der Gruppe bestehend aus Elementen der Gruppe IVa, Elementen der Gruppe Va und Elementen der Gruppe VIa im Periodensystem, Al und Si ausgewählt ist, und mindestens ein Element, das aus der Gruppe bestehend aus Kohlenstoff, Stickstoff, Sauerstoff und Bor ausgewählt ist, enthält.

3. Wendeschneidplatte (1) nach Anspruch 2, wobei die Verbindung Aluminiumoxid ist.

4. Wendeschneidplatte (1) nach Anspruch 1, wobei die Beschichtungsschicht (11) eine Dicke im Bereich von 0,05 bis 30 µm aufweist.

5. Wendeschneidplatte (1) nach Anspruch 1, wobei die Beschichtungsschicht (11) durch chemische Dampfabscheidung hergestellt ist.

6. Wendeschneidplatte (1) nach Anspruch 1, wobei die Beschichtungsschicht (11) durch Lichtbogen-Ionenplattierung oder Magnetron-Sputtern hergestellt ist.

7. Wendeschneidplatte (1) nach Anspruch 1, wobei das Substrat (10) aus einem beliebigen Material umfassend Sinterkarbiden, Cermet, Hochgeschwindigkeitsstählen, Keramiken, kubischen Bornitrid-Sinterpresskörpern, Diamant-Sinterpresskörpern und gesintertem Siliziumnitrid-Sinterpresskörpern gebildet ist.

8. Wendeschneidplatte (1) nach Anspruch 1, wobei die Wendeschneidplatte (1) eine Wendeschneidplatte zum Bohren, Stirnfräsen, Fräsen, Kurbelwellenstiftfräsen, Drehen, zur Blechbearbeitung, Verzahnungsbearbeitung, Falzbearbeitung oder Gewindebohrung ist.

## Revendications

1. Plaquette de coupe amovible (1) présentant une structure incluant au moins une face de dépouille (2) et une surface de support (5), comprenant un substrat (10) et une couche de revêtement (11) disposée sur le substrat (10), la couche de revêtement (11) incluant une ou plusieurs couches et la plaquette de coupe amovible (1) étant une plaquette de coupe positive dont la surface supérieure représente la face de dépouille (2) et la surface inférieure représente la surface de support (5),
**caractérisée en ce que** la couche de revêtement (11) satisfait à la relation 0,9 > R1 / R2, dans laquelle R1 représente la rugosité de surface Rz de la couche de revêtement (11) dans la face de dépouille (2) et où R2 représente la rugosité de surface Rz de la couche de revêtement (11) dans la surface de support (5),
où Rz fait référence à la hauteur des irrégularités sur dix points, et
**en ce que** la ou les couches dans la face de dépouille incluent une couche constituée d'oxyde d'aluminium qui présente une contrainte résiduelle en compression.

2. Plaquette de coupe amovible (1) selon la revendication 1, dans laquelle la couche de revêtement (11) inclut au moins une couche constituée d'un composé comprenant au moins un élément constitué des éléments du groupe IVa, des éléments du groupe Va, des éléments du groupe VIa dans le tableau périodique, d'Al et de Si, et d'au moins un élément sélectionné à partir du groupe constitué du carbone, de l'azote, de l'oxygène et du bore.

3. Plaquette de coupe amovible (1) selon la revendication 2, dans laquelle le composé est un oxyde d'aluminium.

4. Plaquette de coupe amovible (1) selon la revendication 1, dans laquelle la couche de revêtement (11) présente une épaisseur située dans la plage allant de 0,05 à 30 *µ*m.

5. Plaquette de coupe amovible (1) selon la revendication 1, dans laquelle la couche de revêtement (11) est générée par dépôt chimique en phase vapeur.

6. Plaquette de coupe amovible (1) selon la revendication 1, dans laquelle la couche de revêtement (11) est générée par plaquage ionique par arc ou par pulvérisation par magnétron.

7. Plaquette de coupe amovible (1) selon la revendication 1, dans laquelle le substrat (10) est constitué d'un quelconque élément parmi les carbures cémentés, les cermets, les aciers rapides, les céramiques, les comprimés de nitrure de bore cubique fritté, les comprimés de diamant fritté et les comprimés de nitrure de silicium fritté.

8. Plaquette de coupe amovible (1) selon la revendication 1, la plaquette de coupe amovible (1) étant une plaquette de coupe amovible permettant le perçage, le fraisage combiné, l'usinage par scie circulaire, l'usinage de dentures, l'alésage, l'usinage par tassement, le fraisage d'arbre de vilebrequin, le fraisage ou le tournage.
